# EUROPÄISCHE PATENTSCHRIFT

(11) **EP 2 437 510 B1**
(45) Veröffentlichungstag und Bekanntmachung des Hinweises auf die Patenterteilung: **22.07.2020**
(21) Anmeldenummer: 11179958.1
(22) Anmeldetag: 02.09.2011
(51) Int. Cl.: H04N 21/422, H04N 21/482, H04N 21/4722, H04N 21/485, H04N 21/47

(54) **Interaktive Programmführungseinrichtung mit Steuerfunktionen für einen digitalen Fernsehempfänger**
Interactive program management device with management functions for a digital television receiver
Dispositif de commande de programme interactif doté de fonctions de commande pour un récepteur de télévision numérique

(30) Priorität: 02.09.2010 DE 102010036227
(43) Veröffentlichungstag der Anmeldung: 04.04.2012
(73) Patentinhaber: TechniSat Digital GmbH, 54550 Daun (DE)
(72) Erfinder: Leucht, Jan, 54550 Daun (DE); Krüger, Daniel, 56767 Lirstal (DE); Rother, Norman, 01187 Dresden (DE)

(56) Entgegenhaltungen:
- WO-A1-97/42763
- WO-A1-97/49242
- WO-A1-99/48287
- US-A1- 2002 144 264
- "How To Use Microsoft Word 2007", , 10 October 2010 (2010-10-10), pages 1-14, XP055215842, Retrieved from the Internet: URL:http://web.simmons.edu/~gslislab/websi te/howto/word2007.pdf [retrieved on 2015-09-24]
- Microsoft: "Microsoft Launches Windows Vista and Microsoft Office 2007 to Consumers Worldwide | News Center", , 29 January 2007 (2007-01-29), XP055215873, Retrieved from the Internet: URL:https://news.microsoft.com/2007/01/29/ microsoft-launches-windows-vista-and-micro soft-office-2007-to-consumers-worldwide/ [retrieved on 2015-09-24]

## Beschreibung

### Anwendungsgebiet der Erfindung

Die Erfindung betrifft eine interaktive Programmführungseinrichtung mit Steuerfunktionen für einen digitalen Fernsehempfänger zum Aufbereiten, Auswählen und Anzeigen von Begleitinformation zu Programmen und Sendungen von Rundfunk- bzw. Kabelfernsehservice sowie zum zentralen Steuern von Benutzerfunktionen des Fernsehempfängers. Die Programmführungseinrichtung bezieht die Begleitinformation in Form von Programmdaten von Serviceanbietern der Rundfunkprogramme zu aktuell und zukünftig empfangbaren Hör- und/oder Fernsehsendungen über einen digitalen Übertragungsweg für Rundfunk- bzw. Kabelfernsehservice oder aus einem multimedialen Netzwerkanschluss, wie dem Internet.

### Technischer Hintergrund der Erfindung

Im Marktbereich für Rundfunk- bzw. Kabelfernsehservice, nachfolgend als ,digitaler Videorundfunk', DVB, bezeichnet, führte eine Zunahme an Programminhalten, Verbreitungsformen und Übertragungswegen, wie per Satellit, Breitbandkabel, terrestrisch oder über Internetverbindungen, zu einem erhöhten Bedürfnis für eine komfortable Programmnavigation innerhalb der Vielzahl von verfügbaren Videorundfunkdiensten.

Ein digitaler Videorundfunk, beispielsweise nach einem Digital Video Broadcasting Standard, kurz als DVB-Standard bezeichnet, enthält in den zum Übertragen genutzten Transportströmen neben komprimierter Video- und Audioinformation auch Datenpakete mit aktueller Programmbegleitinformation, der so genannten ,DVB-Serviceinformation', DVB-SI. Die in digitalen TV-Empfängern genutzte DVB-Serviceinformation bietet insbesondere bei einer Satellitenübertragung den Vorteil, dass Transportströme gegenüber einer analogen Signalübertragung in relativ kurzen Zeitabständen eine wesentlich größere Menge an aktueller Begleitinformation zum Programmangebot transportieren können.

Mit einem geringen technischen Aufwand lässt sich diese Begleitinformation gemeinsam mit weiterer Programminformation, welche besondere Dienstanbieter redaktionell aufbereiten, im TV-Empfänger als Programmdaten in nichtflüchtigen Speichermitteln speichern und auf Nutzerwunsch mit empfängerinternen Mitteln komfortabel zu einer elektronischen Programmführung aufbereiten und auf dem Wiedergabeschirm darstellen. Dabei ermöglicht die elektronische Programmführung bezüglich der Aktualität und Auffindbarkeit der Begleitinformation einen beachtlichen Zusatznutzen gegenüber den bekannten gedruckten Programmzeitschriften.

Die DVB-SI für digitale Videorundfunkübertragungen enthält im Allgemeinen unter anderem die folgende Begleitinformation in den Datentafeln ,Event Information Table', EIT, und ,Service Description Table', SDT, gemäß dem ETSI-Standard, ETS 300 468:
- einen Descriptor, der eine Kurzbeschreibung der übertragenen Sendung, den so genannten 'Event', liefert,
- einen 'extended_event_descriptor', der eine ausführliche Beschreibung der Sendung liefert,
- einen 'component_descriptor', der eine Beschreibung der Daten, z.B. Video, Audio, Auflösung, Seitenverhältnis, Bildwiederholfrequenz, liefert,
- einen 'CA-identifier-descriptor', der eine Programmverschlüsselung anzeigt,
- einen 'content-descriptor', der eine Klassifikation nach Programmart bzw. Kategorie der Sendung anzeigt, z.B.Krimi, Unterhaltung, Dokumentation, Nachrichten, und anderes
- einen 'multilingual-component-descriptor' für eine mehrsprachige Beschreibung des Inhalts der Sendung,
- einen 'parental-rating-descriptor' für eine Altersbeschränkung der Sendung,
- außerdem überträgt ein 'Program Delivery Control descriptor' das Video Programming System Label.

Der Name des Media-Dienstes selbst ist als ,service name' aus der ,Service Description Table' zu entnehmen. Die Information ist in Form von DVB-Descriptor-Tags für eine elektronische Programmführung, auch 'EPG' genannt, und zur zeitrichtigen Aufnahmesteuerung verfügbar.

Ein Media-Dienst stellt den Programminhalt bereit und kann im Sinne der vorliegenden Erfindung nicht nur ein Rundfunkservice oder ein Kabelfernsehservice sein, sondern auch jede andere Programmquelle, die Sendungen liefert, inklusive über externe Audio/Video-Anschlüsse, Netzwerk-, USB-Anschluss oder andere mit Computerschnittstellen verbundene Wiedergabegeräte, wie Blue Ray-, DVD-oder Audiogeräte, Photo-und Videokameras sowie Internet-Fernsehen, welche Programminhalt für eine Wiedergabe mit dem Fernsehempfänger bereitstellen. In der vorliegenden Erfindung wird deshalb für die vorgenannten Dienste und Lieferanten von Programminhalt der Oberbegriff Programmquelle verwendet.

Eine in der computergestützten Gerätesteuerung des Fernsehempfängers integrierte Programmführungseinrichtung speichert die Programmdaten der Begleitinformation zwischen, generiert eine an Nutzerwünsche angepasste, lokale elektronische Programmführung und stellt diese in Anzeigetafeln einer graphischen Benutzeroberfläche, als ,GUI' bezeichnet, auf einem Wiedergabeschirm zum Bedienen des Fernsehempfängers und gegebenenfalls angeschlossener peripherer Geräte dar. Lokale Bedienelemente des Fernsehempfängers und eines Fernbediengebers ermöglichen dem Empfängernutzer alle für den Betrieb des Fernsehempfängers benötigte Funktionen einzustellen bzw. abzurufen.

Die interaktive Programmführungseinrichtung im Sinne dieser Erfindung ist somit ein Anzeige- und Bedienungsmenüsystem, welches einem Gerätenutzer mittels einer geräteinternen Software eine Möglichkeit bietet, neben der Präsentation von Begleitinformation in Form einer Programmvorschau für einen Media-Dienst, nach Bedarf Detailinformationen zu einzelnen Sendungen aufzurufen und außerdem verschiedene Auswahl-, Sortier-, Programmier- und Einstellfunktionen des Fernsehempfängers zu nutzen. Zu den interaktiven Funktionen gehören beispielsweise ein Abstimmen des Empfängers auf ausgewählte Programmquellen, ein Programmieren von Zeitschaltfunktionen zum automatischen Aufzeichnen von Sendungen und zum automatischen Programmwechsel beim Beginn von ausgewählten Sendungen sowie Such- und Sortierfunktionen beim Auswählen von Sendungen zum Aufzeichnen und Wiedergeben.

Darüber hinaus übernimmt die Programmführungseinrichtung auch die multimediale Steuerzentrale des Fernsehempfängers. Neben den genannten Funktionen wird auch die Medieninhaltwiedergabe von peripher angeschlossenen Geräten, wie Blue Ray Disc-und DVD-Geräten oder anderen externen Speichermedien, sowie eine inhaltliche Verknüpfung von Rundfunk- und Internetinhalten gesteuert. So ist beispielsweise mit Hilfe der interaktiven Programmführungseinrichtung als Hybrid-TV-Lösung, das so genannte 'Hybrid broadcast broadband TV', kurz HbbTV bezeichnet, unter anderem ein Auslesen von speziellen Netzseiten, wie HTML-Seiten, über Netzwerkverbindungen nach dem Internetprotokoll IP und ein Abfordern von Fernsehsendungen aus einem Netzwerk mit dem Fernbediengeber des Fernsehempfängers möglich.

Ein Nutzer des Fernsehempfängers kann die Programmführungseinrichtung so konfigurieren, dass auch interne Programmaufzeichnungsmittel, wie eine Festplatte, und Sendungen aus dem Internet, wie eine Programmquelle, benutzt werden können. Darüber hinaus kann auch der Programminhalt von extern angeschlossenen Wiedergabegeräten mit der Programmführungseinrichtung aufgerufen und verwaltet werden.

Neben der im Transportstrom von TV-Programmen verbreiteten Serviceinformation halten weitere Programmdatenquellen ebenfalls Programmdaten mit Begleitinformation bereit, welche ein Fernsehempfänger über entsprechende Rundfunk-Übertragungskanäle oder über einen Netzzugang zu einem serverbasierten Kommunikationsnetz abfordern kann. Die Serviceanbieter stellen die Begleitinformation, insbesondere die DVB-Serviceinformation, in der Regel als Zusatzangebot und oft auch kostenlos bereit. Digitale Fernsehempfänger können die Begleitinformation systemunabhängig empfangen und unabhängig von einer Datenstruktur des Anbieters zu einer grafischen Benutzeroberfläche aufbereiten.

Für die vorliegende Erfindung ist es daher unerheblich, über welche Signal- bzw. Medienquelle die Programmdaten zum TV-Empfänger gelangen.

Außerdem ist für die vorliegende Anmeldung unerheblich, ob der Gegenstand der Anmeldung in einem Fernsehempfänger mit oder ohne integrierten Wiedergabebildschirm realisiert wird. Im Sinne dieser Anmeldung ist auch ein Vorschaltempfänger, eine so genannte 'Set-Top-Box', ein Fernsehempfänger.

In der Praxis hat sich auch herausgestellt, dass die Serviceanbieter die Möglichkeiten für die Anwendung von Serviceinformation zur Information der TV-Gerätenutzer über ihr Programmangebot sehr differenziert nutzen. Insbesondere existieren auch digitale Videorundfunkdienste, welche keine oder Programminformation nur für eine kürzere Vorschauzeit bereitstellen als die allgemein übliche Vorschau über sieben Programmtage oder grundsätzlich nicht alle Informationskomponenten bereitstellen.

Diese Tatsache erschwert einem Nutzer die Orientierung innerhalb einer Programmführung, insbesondere wenn die Programmführung durch empfängerinterne und technisch beschränkte Computermittel eines Fernsehempfängers generiert wird, erheblich. Als empfängerseitige technische Einschränkung können sowohl eine beschränkte Funktionalität und Tastenzahl der Tastatur des Fernbediengebers als auch die relativ geringe Arbeitsgeschwindigkeit von Datenprozessoren in der Gerätesteuerung und eine im Vergleich zu üblichen Computern geringe Rechenkapazität angesehen werden. Die genannten empfängerseitigen Einschränkungen behindern insbesondere die Suchfunktionen innerhalb der Programmdaten, so dass oft erhebliche Wartezeiten nach der Eingabe einer Anfrage und beim Bereitstellen von angeforderter Begleitinformation zu bestimmten Sendungen einer TV-Programmquelle in Folge von fehlenden Programmdaten auftreten oder der Programmführer wenig verwertbare Information zeigt. Das erschwert dem Nutzer eine ausreichende Orientierung hinsichtlich von Sendungen, welche die Programmquelle in den kommenden Tagen überträgt.

Ein wesentlicher Mangel der bekanntenelektronischen Programmführung ist darin zusehen, dass insbesondere die Aufbereitung und Präsentation der Programmdaten auf Anzeigetafeln einerseits durch eine wachsende Programmdichte und steigende Zahl an Medienplattformen und Übertragungswegen und andererseits beim Bereitstellen von Programmvorschauen für mehrere Tage, wie beispielsweise für eine Woche, unübersichtlich wird.

Diesen Nachteil haben auch häufig verbreitete Programmführerformen mit Programmtafeln, welche in einem Gitterraster Programmquellen in Zeilenform auflisten und in jeder Programmquellenzeile eine Folge mehrerer aufeinanderfolgender Sendungen der Programmquelle darstellen. Ein zeitliches Navigieren zu einer bestimmten Sendung in der Sendefolge an einem konkreten, vom Nutzer gewünschten Zeitpunkt insbesondere an einem der folgenden Tage ist nur durch ein mühsames Durchblättern der Programmtafeln entlang der Zeitachse möglich. Dabei kann der Nutzer schnell die Übersicht zur Sendezeit von ausgewählten Sendungen verlieren und falsche Entscheidungen zum Auslösen von Terminplanfunktionen treffen.

Als nächstliegend könnte WO 97/49242 A1 angesehen werden. Aus diesem Dokument geht ein Fernsehplansystem hervor sowie und ein Verfahren zum Anzeigen von Fernsehplaninformationen auf einem Fernsehbildschirm umfassend einen Programmführer mit einem Zeitplaninformationsbereich, der die Programme darstellt, die zu jedem Zeitpunkt auf jedem Kanal präsentiert werden während des Tages. Ein Eingabegerät ermöglicht es dem Betrachter, den Zeitplaninformationsbereich zu durchsuchen und / oder weitere Informationen über Programme von besonderem Interesse zu erhalten. In einem Aspekt kann der Betrachter eine Sendung auf dem aktuell eingestellten Kanal sehen, während er durch die anderen Kanäle auf einem Teil des Fernsehbildschirms blättert. In einem anderen Aspekt kann der Zuschauer Programme ansehen, die gerade auf dem Fernseher gezeigt werden, während er oder sie den Programmführer durchblättert.

Hinsichtlich der in Betracht kommenden Mittel zur Darstellung von sogenannten Hintergrundinformationen kann u.a. dem Dokument "How to use Microsoft Word 2007" (Quelle: http://web.simmons.edu/∼gslislab/website/howto/word2007.pdf) entnommen werden, dass in Menüs von Computerprogrammen nicht verfügbare Funktionen anders dargestellt werden können (z.B. hellgraue Schrift) als verfügbare (z.B. schwarze Schrift). Der Artikel "Microsoft Launches Windows Vista and Microsoft Office 2007 to Consumers Worldwide" (Quelle: https://news.microsoft.com/2007/01/29/microsoft-launches-windows-vista-and-microsoft-office-2007-to-consumers-worldwide/) verschafft Gewissheit, dass diese Mittel zur Darstellung zumindest seit Januar 2007 bekannt sind.

Das Dokument WO 97/42763 A1 hat zum Gegenstand ein System und ein Verfahren zum Anzeigen einer elektronischen Programmzeitschrift. Das System verfügt über Bereiche zum Anzeigen von Programmplaninformationen. Darüber hinaus verfügt das System über Bereiche, die für Werbeprogramme, Produkte oder Dienstleistungen verwendet werden können. In einer anderen Ausführungsform weist das System Bereiche zum Anzeigen von Nachrichten für den Benutzer auf. Den Ausführungsformen kann eine Zeitscala entnommen werden.

Aus der WO 99/48287 A1 ist darüber hinaus bekannt ein elektronisches Programmführungssystem. Selbiges kann einen elektronischen Programmführer (EPG) anzeigen, der eine grafische Darstellung der aktuellen Zeit in Bezug auf einen Programmzeitraumbereich enthält, damit der Betrachter die aktuelle Zeit in Bezug auf ein bestimmtes Programm, das dies zulässt, intuitiv beurteilen kann. Der Betrachter muss auch die verbleibende Zeit für dieses Programm bewerten. Die grafische Darstellung der aktuellen Zeit kann in einer Farbänderung oder Schattierung des Programmzeitraumbereichs relativ zu einem Hintergrund, einer Hintergrundfarbänderung einer grafischen Zeitlinie neben dem Programmzeitraumbereich und / oder Hash- / Häkchen enthalten sein. Eine solche grafische Darstellung der aktuellen Zeit innerhalb der Programmbereiche und für die Programmkanal-Programmlisten bezieht sich auch auf eine inkrementelle Zeitlinie, die die Zeitspanne der aktuell angezeigten Programmlisten zeigt.

Bekannt ist ferner aus der US 2002/0144264 A1, dass eine Linie, die die aktuelle Zeit angibt, in mindestens einem Teil eines elektronischen Programmführers (EPG) angezeigt wird. Die Linie ist senkrecht zur Zeitachse des EPG und halbiert mindestens ein Programmelement des EPG in einen verstrichenen Teil und einen verbleibenden Teil, wobei jede Größe proportional zu den dadurch dargestellten Zeiträumen ist. Das Verhältnis der verstrichenen Zeit zur Laufzeit des Programms ist ein Hinweis auf den Abschlussstatus des Programms. In bestimmten Implementierungen halbiert die Zeile mehrere Elemente des EPG, so dass der Benutzer den Abschlussstatus einer Vielzahl von Programmen sofort bestimmen kann.

Eine durch den Anmelder bereits genutzte Programmführungseinrichtung schafft auf Programmtafeln mit einer Programmquellenauswahl mehr Übersicht und bessere Lesbarkeit, indem jede Programmtafel nur eine einzige Sendung für jede Programmquelle auflistet, welche zu einem vom Benutzer ausgewählten Wiedergabezeitpunkt läuft bzw. laufen wird. Wenn ein Nutzer Informationen zu Sendungen mit späteren Anfangszeiten angezeigt bekommen möchte, generiert ein geräteinterner Menügenerator dann jeweils für die Sendung aus der angezeigten Programmquellenauswahl mit der nächstliegenden Anfangszeit eine Anschlusstafel in Form einer neuen Programmtafel, der ein späterer Wiedergabezeitpunkt zu Grunde liegt.

Im Gegensatz zur oben dargestellten Programmführerform mit einem Gitterraster auf den Programmtafeln generiert die letztgenannte Programmführungseinrichtung Programmtafeln, bei denen die Sendefolgen zu den ausgewählten Videorundfunkdiensten und damit jeweils der Wiedergabezeitpunkt, welcher der Programmtafel zu Grunde liegt, ohne eine feste Rasterung auf der Zeitachse zwischen den Sendungen dargestellt werden. Das heißt, die Abstände zwischen den in der Wiedergabezeit aufeinanderfolgenden Programmtafeln werden dynamisch generiert und hängen von der Dauer einer Sendung in der angezeigten Programmquellenauswahl ab. Wenn beispielsweise um 19:50 Uhr bei einer ersten Programmquelle eine Sendung beginnt und um 19:53 Uhr bei einer zweiten Programmquelle eine andere Sendung, generiert der Menügenerator beim Durchblättern der Programmtafeln entlang der Zeitachse zwei aufeinanderfolgende Tafeln, die sich sowohl im Inhalt als auch bezüglich des Wiedergabezeitpunktes, welcher der Programmtafel zu Grunde liegt, um einen Abstand von nur drei Minuten unterscheiden.

Beginnen dagegen jedoch bei allen auf einer Programmtafel dargestellten Programmquellen um 20:15 Uhr Sendungen, die mindestens 90 Minuten laufen, so folgt beim Durchblättern der Programmtafeln entlang der Zeitachse die Anschlusstafel erst in einem Zeitabstand von 90 Minuten. Der Menügenerator generiert eine Anschlusstafel mit einem dynamischen Zeitabstand, welchem im vorliegenden Fall ein Wiedergabezeitpunkt um 21:45 Uhr zu Grunde liegt.

Ein zum Fernsehen allgemein üblicher großer Betrachtungsabstand zum Wiedergabeschirm in Verbindung mit einer relativ geringen Auflösung des Wiedergabeschirms gegenüber Computermonitoren begrenzen die Erkennbarkeit von Textdarstellungen, so dass auf jeder Anzeigetafel nur eine geringe Anzahl von Worten dargestellt werden sollte.

Das Zusammenspiel der begrenzten Textdarstellung pro Anzeigetafel mit einer großen Anzahl an verfügbaren Programmquellen, welche beim Satellitenempfang einige Hundert Programmquellen umfassen, bedingen ein rasches Ansteigen der Anzahl an Anzeigetafeln für eine Programmvorschau über mehrere Tage. Um alle im geräteinternen nichtflüchtigen Speicher als Datensätze befindlichen Sendungen nur allein mit dem Titel und der Anfangs- und Endzeit, der so genannten 'Kurzbeschreibung', in einer übersichtlichen Form und auf gut lesbaren Anzeigetafeln für eine Programmvorschau darzustellen, hat der empfängerinterne Menügenerator die Möglichkeit, abhängig vom Nutzerwunsch, mehrere Hundert bis Tausend Anzeigetafeln mit Programminformation zu generieren. Diese Anzahl von Anzeigetafeln ergibt sich theoretisch daraus, wenn zu jeder Sendung, dem so genannten 'Event', die entsprechende 'Kurzbeschreibung' beispielsweise für 10 bis 15 Videorundfunkdienste auf einer Anzeigetafel dargestellt werden soll.

Um dem Nutzer die Orientierung innerhalb der genannten Vielzahl der möglichen darstellbaren Anzeigetafeln zu erleichtern, sind hohe Anforderungen an die Navigation zum Aufrufen einer Anzeigetafel mit Programminformation zu einer gewünschten Sendung eines bestimmten Videorundfunkdienstes zu stellen.

Das Anliegen der Erfindung besteht deshalb darin, die empfangenen Programmdaten mit empfängerinternen Mitteln so aufzubereiten, dass gut lesbare interaktive Anzeigetafeln entstehen, welche dem Nutzer einen hohen Bedienkomfort mit einer verbesserten Übersicht bei der Benutzung und dem Einstellen eines digitalen Fernsehempfängers bieten. Deshalb ist es ist wünschenswert, dass jede auf dem Wiedergabeschirm dargestellte Anzeigetafel mit Programminformation dem Nutzer auf einfache Weise die zeitliche Gesamtzuordnung der dargestellten Sendungen zu einem zeitlichen Bereich im Rahmen der darstellbaren zeitlichen Gesamtübersicht und die Zuordnung zu den Programmquellen anzeigt. Darüber hinaus soll erkennbar sein, in welchem sachlichen und zeitlichen Bereich die Anzeige verlassen oder gewechselt werden kann. Insbesondere hat die praktische Umsetzung der letztgenannten Programmführungseinrichtung mit dynamischen Abständen zwischen benachbarten Programmtafeln entlang der Zeitachse gezeigt, dass es wünschenswert ist, ein Anzeigemittel bereitzustellen, welches dem Nutzer für eine zeitliche Navigation innerhalb der Gesamtanzahl der generierbaren Anzeigetafeln die Übersichtlichkeit auf einfache Weise verbessert.

Eine Verbesserung der Navigation mit einer vereinfachten Auffindbarkeit von audiovisuellen Inhalten ist eine vorrangige Anforderung an die interaktive Programmführungseinrichtung gemäß der Erfindung. Darüber hinaus soll dem Nutzer auf einfache Weise angezeigt werden, wenn Information, die er erwartet, nicht zur Verfügung steht.

### Darstellung der Erfindung

Die Aufgabe gemäß der Erfindung löst eine interaktive Programmführungseinrichtung mit Steuerfunktionen für den digitalen Fernsehempfänger und mit empfängerinternen Menügeneratormitteln, welche mittels Begleitinformation zu verfügbaren Programmquellen eine interaktive Benutzeroberfläche mit Anzeigetafeln für Programminformation erstellen. Die Programminformation der Anzeigetafeln basiert auf Programmdaten zu Sendungen, die in nichtflüchtigen Speichermitteln des Fernsehempfängers gespeichert sind.

Gemäß der Erfindung erstellen die Menügeneratormittel für die Anzeigetafeln der Benutzeroberfläche im Wesentlichen mindestens zwei Menü-Hierarchien zum simultanen Darstellen auf einem Wiedergabeschirm.

Die Menü-Hierarchien sind: Erstens: Eine Hauptmenü-Hierarchie, in der die Menügeneratormittel entsprechend von Nutzeranfragen aus den nichtflüchtigen Speichermitteln Programmdaten zu Sendungen abfordern,
- um einerseits eine Programmquellenliste zu erstellen und die Programmquellenliste als einen Teil von verfügbaren Programmquellen in einem ersten Anzeigebereich des Wiedergabeschirms mindestens mit dem Namen der Programmquellen so darzustellen, dass eine Programmquelle mit Cursormitteln ausgewählt und markiert werden kann, um durch Betätigen eines Eingabemittels für die markierte Programmquelle Einstellparameter zum Ausführen einer Gerätefunktion aus den Speichermitteln abzurufen und
- um andererseits aus den Programmdaten einen Zeitnavigator für die Anfangszeiten von Sendungen zu generieren, welcher in einen zweiten Anzeigebereich des Wiedergabeschirms auf einem Programmzeitstrahl die zur markierten Programmquelle gespeicherten Programmstartzeiten für einen Programmvorschau-Zeitraum anzeigt. Zweitens: Eine Untermenü-Hierarchie, welche für die markierte Programmquelle auf Eingabe-Aufforderung durch einen Nutzer in einem weiteren Anzeigebereich des Wiedergabeschirms weitere Begleitinformation mindestens für die markierte Programmquelle darstellt.

Im Sinne des vorliegenden Dokumentes sind als weitere Begleitinformation sowohl eine Anzeigetafel mit einer Programmvorschauliste für Sendungen der markierten Programmquelle als auch eine Sendungstafel mit Suchergebnissen aus einer Sendungssuche für eine Zeitprogrammierung einer Sendung, beispielsweise die Zeitprogrammierung einer Aufzeichnung mit einer privaten Videorecorderfunktion, oder eine Anzeigetafel mit einer ausführlichen Beschreibung zur Sendung zu verstehen.

Nach einer vorteilhaften Ausführung stellen die Menügeneratormittel den ersten und den zweiten Anzeigebereich so dar, dass für den Nutzer leicht die zeitliche Zuordnung für die weitere Begleitinformation in der Untermenü-Hierarchie in der Umgebung des gesamten Programmvorschau-Zeitraums und die Zuordnung zur Programmquelle erkennbar ist.

Als gesamter Programmvorschau-Zeitraum im Sinne dieser Erfindung ist ein Programmzeitstrahl zu verstehen, der alle Wochentage als Festmarkierung umfasst, für die ein Nutzer durch Eingabe-Aufforderung detaillierte Begleitinformation zu verfügbaren Programmquellen für eine Darstellung im weiteren Anzeigebereich, der in der Untermenü-Hierarchie liegt, anfordern kann.

Nach einer besonders vorteilhaften Ausführung der Erfindung überprüfen die Menügeneratormittel beim Markieren einer Programmquelle mit dem Cursor und Betätigen des Eingabemittels den Umfang der vorliegenden Begleitinformation zu Sendungen der Programmquelle im Programmvorschau-Zeitraum, um die Zeitbereiche des Programmzeitstrahls, für welche die nichtflüchtigen Speichermittel keine Programmdaten von Sendungen enthalten, anders anzeigen, als die Zeitbereiche, für die die nichtflüchtigen Speichermittel Programmdaten von Sendungen enthalten. Bevorzugt wird die Bezeichnung von Wochentagen, zu denen die nichtflüchtigen Speichermittel keine Programmdaten enthalten, weniger intensiv oder auf einer anderen Weise graphisch dargestellt.

Auf diese Weise kann ein Nutzer unabhängig von der dargestellten Programminformation in der Untermenü-Hierarchie bereits erkennen, bis zu welchem Wochentag für die in der Programmquellenauswahl angezeigten Programmquellen Begleitinformation zu Sendungen in den nichtflüchtigen Speichermitteln des Fernsehempfängers gespeichert ist. Damit wird vermieden, dass der Nutzer vergebens nach Begleitinformation für eine Programmvorschau sucht, welche eine ausgewählte Programmquelle nicht geliefert hat.

In einer weiteren vorteilhaften Ausführung der Erfindung stellen die Menügeneratormittel den zweiten Anzeigebereich als eine dynamische Verlaufsanzeige im Programmzeitstrahl dar, dessen Status vom durch einen Nutzer ausgewählten Wiedergabezeitpunkt für die in der Untermenü-Hierarchie angezeigte Programminformation abhängt.

Auf diese Weise erkennt der Nutzer übersichtlich die zeitliche Zuordnung von auf dem Wiedergabeschirm in der Untermenü-Hierarchie angezeigter Begleitinformation am ausgewählten Wiedergabezeitpunkt in einer Relation zum Programmvorschau-Zeitraum.

Darüber hinaus stellen beim Navigieren innerhalb von Anzeigetafeln die Menügeneratormittel in der Untermenü-Hierarchie, insbesondere zwischen Anzeigetafeln mit Programmvorschaulisten, für den Zeitnavigator die Startzeit einer in der Programmvorschauliste mit einer Anzeige eines aktiven Cursors markierten Sendung bereit. Dieses Merkmal unterstützt die Übersichtlichkeit der Anzeige der zeitlichen Lage einer markierten Sendung auf dem Programmzeitstrahl. Bevorzugte Ausführung der Erfindung

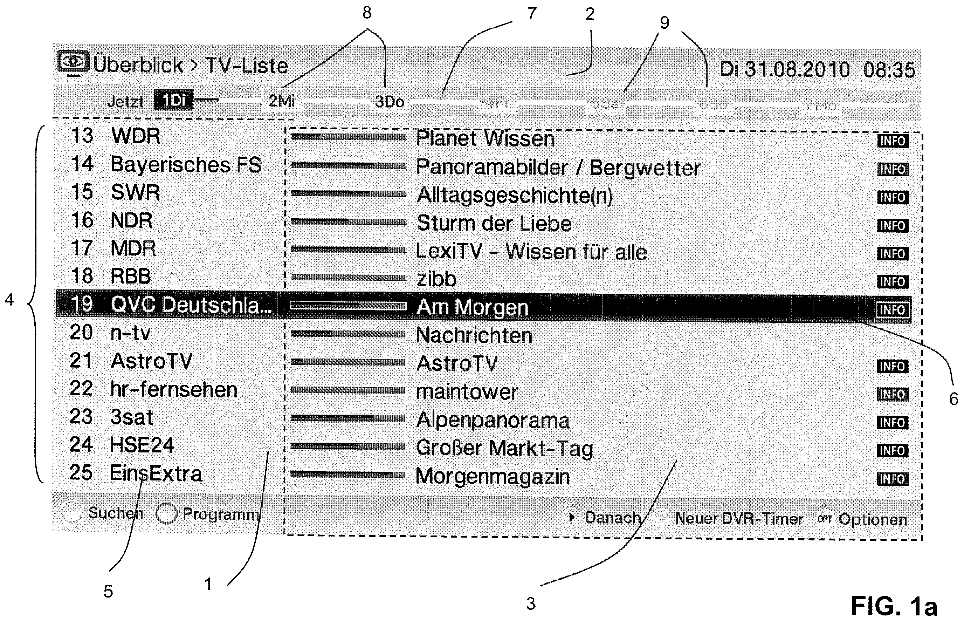

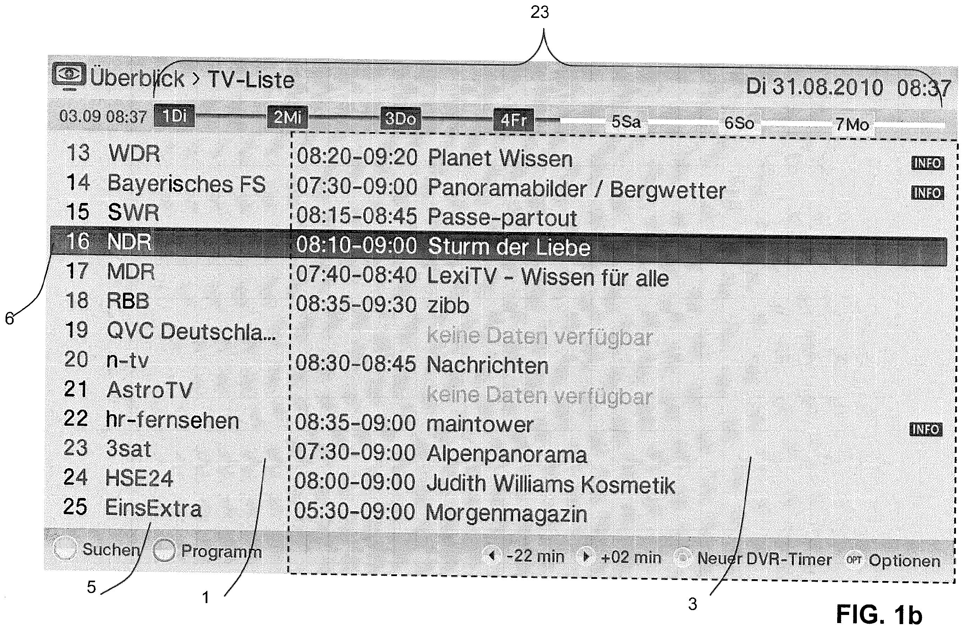

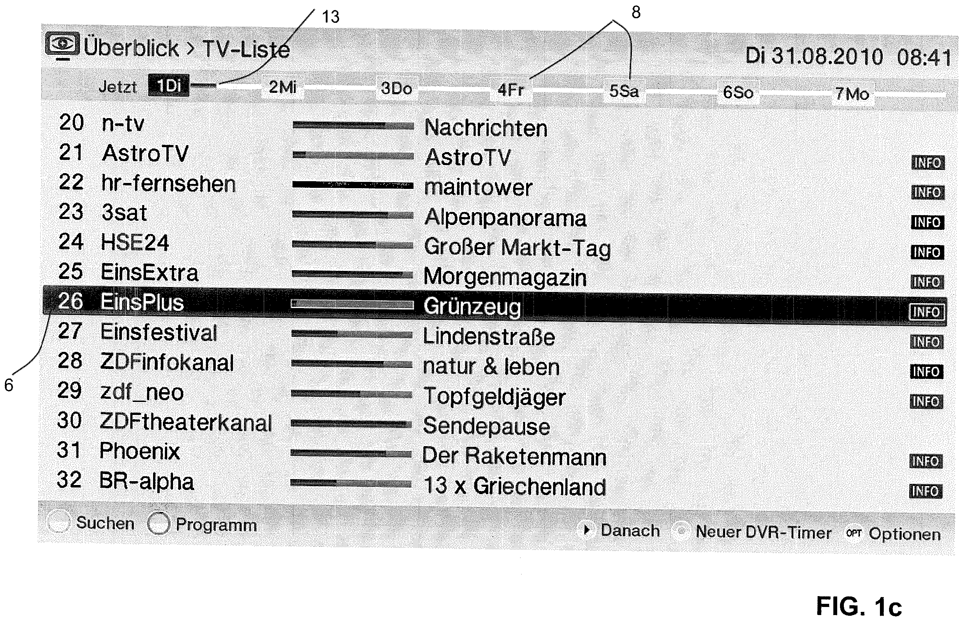

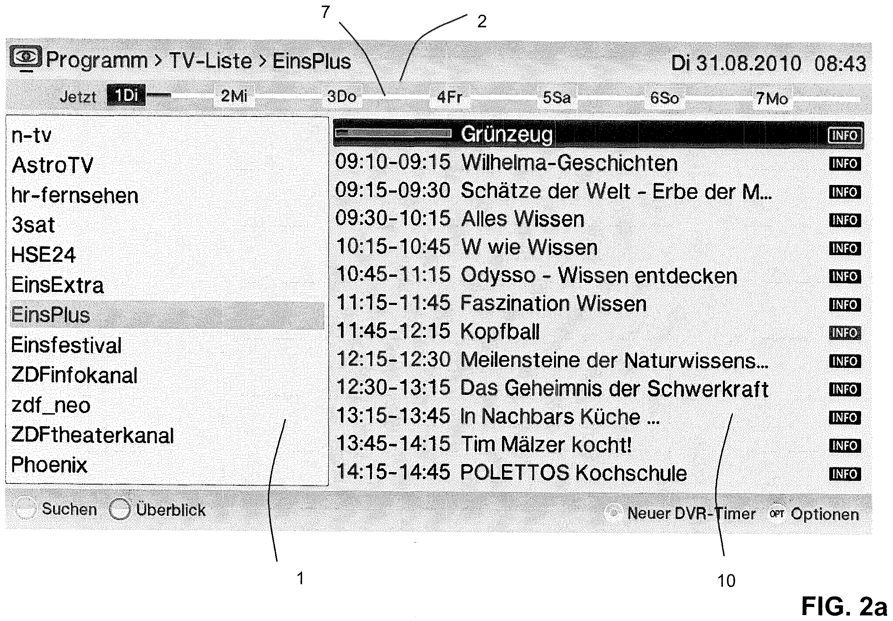

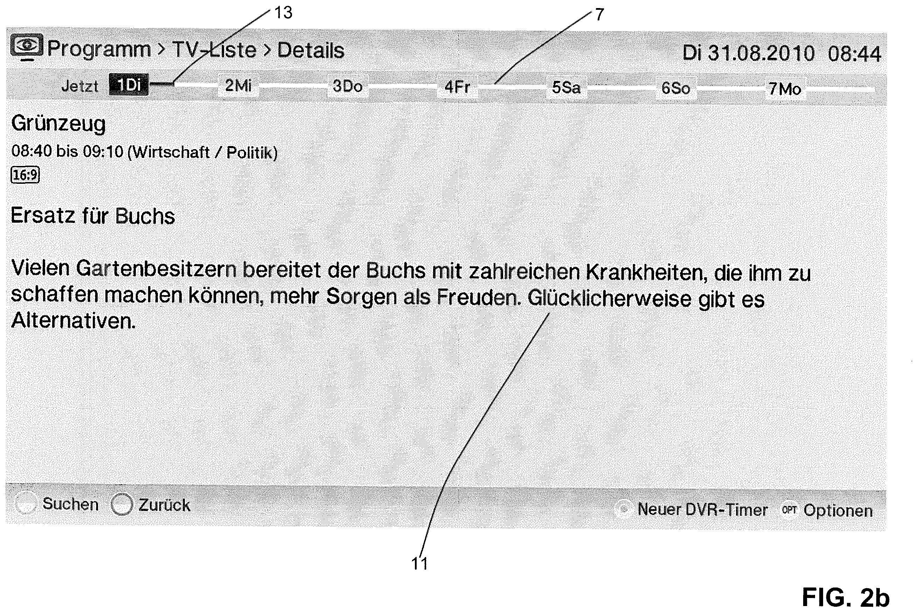

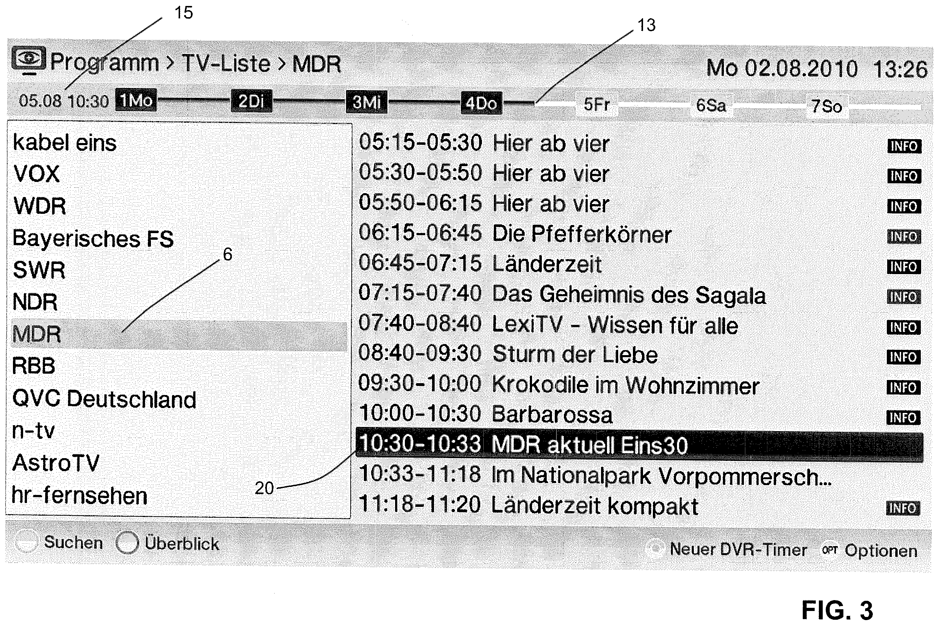

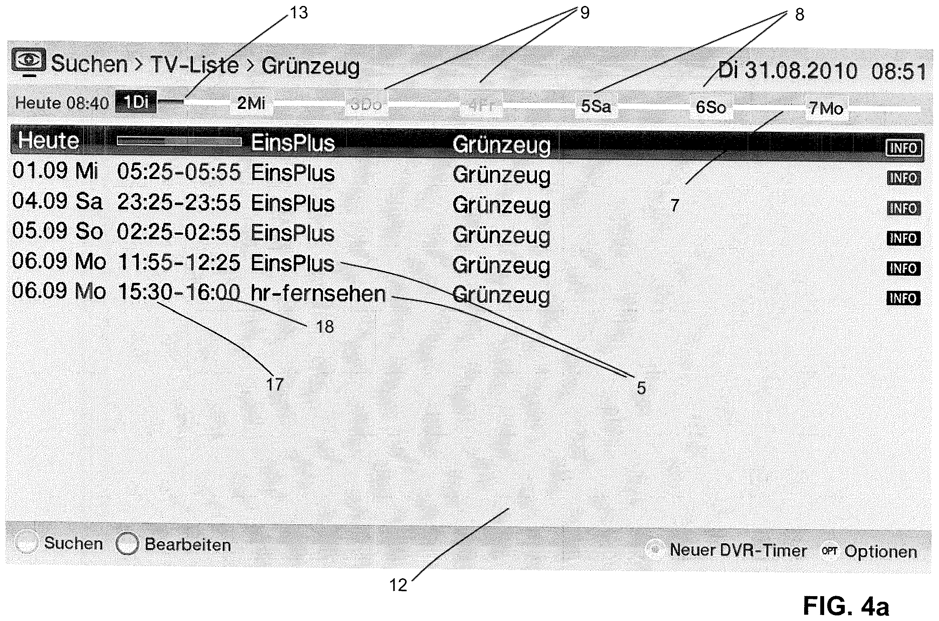

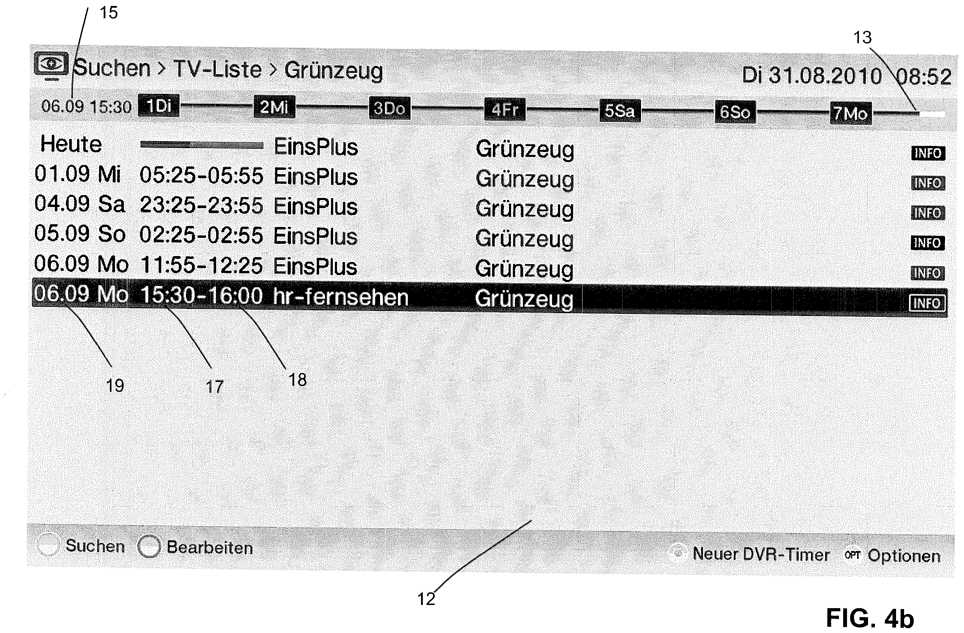

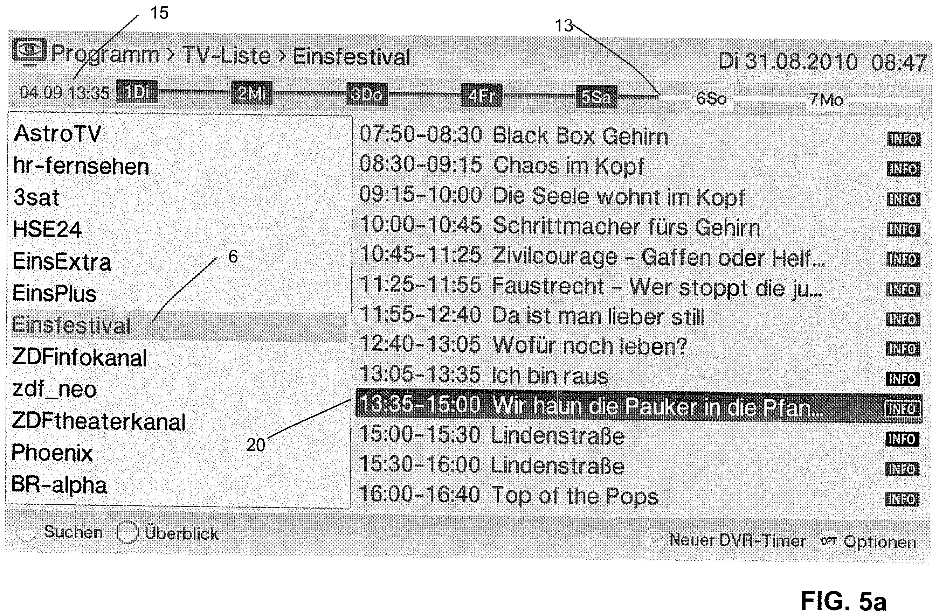

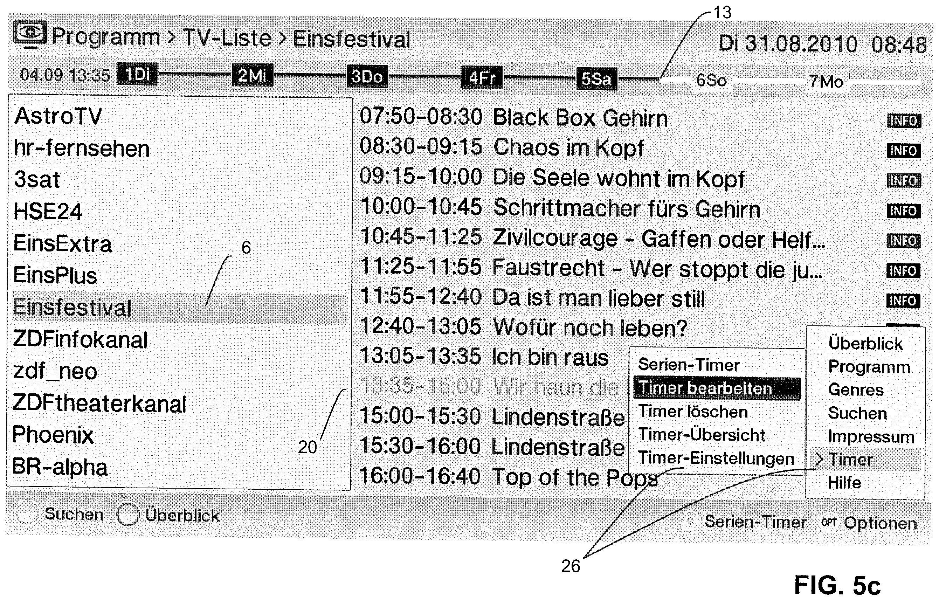

Die Erfindung soll an Hand von Ausführungsbeispielen erläutert werden. Die zugehörigen Figuren zeigen: FIG.1 a eine Anzeigetafel von einer interaktiven Benutzeroberfläche für die Programmführungseinrichtung eines Fernsehempfängers, FIG.1b die Anzeigetafel von FIG.1 a mit einer Programmquellenliste 4, bei der an einem Dienstag (31.08.2010) eine Programmquelle markiert wurde, FIG.1c eine weitere Anzeigetafel analog zu FIG.1a, bei der jedoch eine Programmquelle markiert wurde, welche für alle Tage des Programmvorschau-Zeitraums 23 Programmdaten enthält, FIG.2a.eine Anzeigetafel mit einer gemeinsamen Darstellung einer aus FIG.1 a bis c bekannten Hauptmenü-Hierarchie-Darstellung mit einer geänderten Menüdarstellung in der Untermenü-Hierarchie, FIG.2b die Anzeigetafel nach FIG.2a mit einer ausführlichen Beschreibung von Programminformation zu einer Untermenü-Hierarchie, FIG.3 eine Anzeigetafel, bei der durch Eingabe einer Ziffer, im Beispiel die Ziffer "4", ein anderer Tag innerhalb des Programmvorschau-Zeitraums 23 ausgewählt wurde, FIG.4a und FIG.4b jeweils eine Sendungstafel, die erscheint, wenn der Menügenerator gemäß der Erfindung auf eine Nutzereingabe einen Suchlauf in den gespeicherten Programmdaten nach Sendungen innerhalb des Programmvorschau-Zeitraums startet, sowie FIG.5a und FIG.5c verschiedene Menükombinationen in der Haupt- und Untermenü-Hierarchie zum Programmieren von Empfängerfunktionen.

FIG.1 a zeigt eine Anzeigetafel einer interaktiven Benutzeroberfläche für die Programmführungseinrichtung eines Fernsehempfängers. Gemäß der Erfindung generiert ein in den Zeichnungen nicht dargestellter empfängerinterner Menügenerator ein Hauptmenü zum Aufrufen von diversen Gerätefunktionen, wie zum Umschalten von Programmen, Aufzeichnen von Sendungen und Programmieren von Zeitprogrammfunktionen. Die Darstellung zeigt den Zeitpunkt der Abfrage zu einem bestimmten aktuellen Zeitpunkt, der auf der Anzeigetafel mit "Jetzt" bezeichnet ist. In einem Anzeigebereich 1 liegt eine Programmquellenliste 4, welche Bezeichnungen 5 einer Auswahl von Programmquellen umfasst. Vorteilhaft tragen die ausgewählten Programmquellen neben der Bezeichnung 5 der Programmquelle auch jeweils eine Ordnungsnummer, unter welcher der Fernsehempfänger auf jede Programmquelle mit der Zifferntastatur eines Fernbediengebers einstellbar ist.

Als Programmquellen können auch externe Geräte erscheinen, welche über eine Medien-Schnittstelle mit dem Fernsehempfänger verbunden sind oder Internetverbindungen. Die Programmquellenliste 4 enthält Zellen, welche mit einem Cursor 6 ausgewählt und markiert werden können, so dass beim Betätigen eines Eingabemittels, beispielsweise einer Taste der Fernbedienung in Form einer Ziffern- oder Cursortaste, Einstellparameter zum Ausführen einer Gerätefunktion für die markierte Programmquelle aus den Speichermitteln abgerufen werden.

Cursormittel generieren einen Cursor 6, der in FIG.1 a auf die Bezeichnung 5 einer Programmquelle zeigt. Wobei wie FIG.1b zeigt, die im Gerät gespeicherte Programmvorschau nur Programmdaten von Sendungen für einen begrenzten Zeitraum innerhalb eines festgesetzten Programmvorschau-Zeitraums 23, im Beispiel sieben Tage, umfasst.

Ein Anzeigebereich 2 des Wiedergabeschirms zeigt einen Programmzeitstrahl 7 mit Tagesmarkierungen "1 Di" bis "7 Mo", welche tägliche Zeitbereiche 8 und 9 definieren und den Programmvorschau-Zeitraum 23 für die verfügbaren Videorundfunkdienste umfassen. Wobei zur besseren Zeitnavigation der empfängerinterne Menügenerator den Programmzeitstrahl 7 mit festen täglichen Zeitbereichen 8 und 9 für den gesamten Programmvorschau-Zeitraum 23 unabhängig vom Inhalt der Anzeigetafeln in der Untermenü-Hierarchie generiert.

Im vorliegenden Fall ist in FIG.1 a nur der erste Wochentag im Programmvorschau-Zeitraum 23 hervorgehoben, der die Bezeichnung "1 Di" trägt. Der kurze gefüllte Strich im Programmzeitstrahl 7 zeigt zusätzlich an, dass die Abfrage am Morgen des aktuellen Tages vorgenommen wurde.

Da die markierte Programmquelle nur für zwei Tage im voraus Programminformation bereitstellt, stellt der Menügenerator die Bezeichnungen von Programmtagen, für die keine Programmdaten vorliegen, im Programmzeitstrahl 7 schwächer dar. Im vorliegenden Beispiel werden die Tage Freitag bis Montag schwächer angezeigt. Dieses informiert den Nutzer darüber, dass für die markierte Programmquelle eine Sendungsabfrage beispielsweise für den Samstag nicht möglich sein wird.

Darüber hinaus enthält die FIG.1 a einen weiteren Anzeigebereich 3, der für alle angezeigten Programmquellen den Titel und den Status des Sendelaufs anzeigt.

Mit Eingabemitteln auf der Fernbedienung, insbesondere Cursortasten Auf/Ab, kann die Anzeige der Programmquellenliste 4 vertikal verschoben werden, so dass andere Bereiche aus der gesamten Programmquellenliste sichtbar werden. Die Anzeige der Ordnungsnummer vor der Bezeichnung der Programmquelle unterstützt eine Orientierung zur Navigation in Richtung der Programmquellen.

Im Gegensatz dazu rufen Cursortasten Rechts/Links und die Eingabe über Zifferntasten Anzeigetafeln mit Sendungen zu späteren Anfangszeiten auf. Dabei zeigt eine dynamische Verlaufsanzeige in Form eines analogen Verlaufsbalkens im Programmzeitstrahl 7 des Zeitnavigators an, zu welchem Zeitpunkt eine Programmabfrage erfolgt.

FIG.1b zeigt eine Programmquellenliste 4, bei der an einem Dienstag (31.08.2010) eine Programmquelle markiert wurde, welche Programmdaten für alle sieben Tage des gesamten Programmvorschau-Zeitraums 23 enthält. Durch Eingabe einer Ziffer "4" erfolgte eine Programmabfrage für den folgenden Freitag, im Darstellungsfall dem 03.09.2010. Der Programmzeitstrahl 7 in FIG.1b zeigt an, dass für diese Programmquelle die Sendungen für einen entsprechenden Zeitpunkt am folgenden Freitag abgefragt und bereitgestellt wurden. Zu diesem Zeitpunkt werden auch Sendungen von anderen Programmquellen der gezeigten Programmquellenliste angezeigt. Der verlängert dargestellte dunkle Teil einer dynamischen analogen Verlaufsanzeige im Programmzeitstrahl 7 hilft dem Nutzer bei der graphischen Erkennung, dass sich die Abfrage auf einen Zeitpunkt bezieht, der erst in vier Tagen sein wird.FIG.1b bestätigt außerdem, dass zu diesem Abfragezeitpunkt für andere Programmquellen keine Programmdaten verfügbar sind.

FIG.1c zeigt analog zu FIG.1 a eine Darstellung zum aktuellen Zeitpunkt "Jetzt". Im Unterschied zu FIG.1 a wurde jedoch eine Programmquelle markiert, welche für alle Tage des Programmvorschau-Zeitraums 23 Programmdaten enthält. Beim Betätigen einer Eingabetaste "Programm" schaltet der Menügenerator erfindungsgemäß zur Hauptmenü-Hierarchie eine Untermenü-Hierarchie ein. Das Ergebnis zeigt FIG.2a.

Der empfängerinterne Menügenerator des Fernsehempfängers generiert die in FIG.2a gezeigte mehrteilige Benutzeroberfläche, welche im Wesentlichen mindestens zwei Menü-Hierarchien simultan auf einem Wiedergabeschirm darstellt.

Dabei dient in einer Hauptmenü-Hierarchie der Anzeigebereich 1 mit der Programmquellenliste 4 zur Navigation durch die verfügbaren Programmquellen und der Anzeigebereich 2 mit dem Zeitnavigator und dem Programmzeitstrahl 7 zum zeitlichen Navigieren von Sendungen im Programmvorschau-Zeitraum 23.

Die in FIG.2a gezeigte mehrteilige Benutzeroberfläche enthält im Anzeigefeldbereich 3 eine Anzeigetafel 10 mit Programmvorschaulisten, welche die Untermenü-Hierarchie generiert und die Cursormittel generieren einen zusätzlichen aktiven Cursor, mit welchem innerhalb der Untermenü-Hierarchie mit den Aufwärts- und Abwärtstasten und den Ziffern-Tasten eine Navigation entlang einer Zeitachse möglich ist. Dabei generiert die Untermenü-Hierarchie verschiedene Anzeigetafeln 10 mit Programmvorschaulisten. Auch der Aufruf einer ausführlichen Beschreibung 11 von Programminformation zu einer in der Untermenü-Hierarchie markierten Sendung ist damit möglich. Dieses zeigt FIG.2b.

FIG.3 zeigt, dass durch Eingabe einer Ziffer, im Beispiel die Ziffer "4", auch ein anderer Tag innerhalb des Programmvorschau-Zeitraums 23 ausgewählt werden kann. Die zeitliche Orientierung des Nutzers wird im Anzeigebereich 2 vom Zeitnavigator durch Anzeigen einer kontinuierliche Zeitanzeige der zeitliche Lage 13 im Programmzeitstrahl7 sowie durch einen Bereich, der eine detaillierte Datumsanzeige 15 ausweist, unterstützt, wobei der Zeitnavigator immer die Anfangszeiten der im Untermenü-Hierarchie markierten Sendungen in einer Relation zu einem definierten Programmvorschau-Zeitraum anzeigt.

Wie FIG.3 außerdem zeigt, stellt der Menügenerator beim Navigieren innerhalb von Anzeigetafeln 10 in der Untermenü-Hierarchie, insbesondere zwischen Anzeigetafeln 10 mit Programmvorschaulisten, für den Zeitnavigator die Startzeit einer in der Programmvorschauliste mit einer Anzeige 20 eines aktiven Cursors markierten Sendung bereit, um auf dem Programmzeitstrahl 7 die zeitliche Lage der markierten Sendung anzuzeigen.

Die FIG.4a und FIG.4b zeigen jeweils eine Sendungstafel 12, die erscheint, wenn der Menügenerator gemäß der Erfindung auf die Eingabe "Suchen" durch den Nutzer einen Suchlauf in den gespeicherten Programmdaten nach Sendungen innerhalb des Programmvorschau-Zeitraums startet. Die Orientierung innerhalb der Suchergebnisse der Untermenü-Hierarchie, welche Sendungen enthalten können, welche an verschiedenen Tagen gesendet werden, wird wirksam dadurch erhöht, dass die Hauptmenü-Hierarchie und synchron mit den Suchergebnissen die zeitliche Lage 13 der in der Untermenü-Hierarchie markierten Sendung auf dem Programmzeitstrahl 7 in Relation zum Programmvorschau-Zeitraum ausgibt.

Die Figuren 5a bis 5c zeigen, dass der Menügenerator gemäß der Erfindung durch ein Zusammenwirken von Untermenü-Hierarchie und Hauptmenü-Hierarchie verschiedene Arten von Geräteeinstellungen unterstützt. So können beispielsweise Zeitprogrammierungen des Empfängers selbst oder Aufzeichnungsfunktionen zum einmaligen oder periodischen Aufzeichnen oder zum Wechsel beim Empfang zwischen verschiedenen Programmen eingerichtet werden. Während der Aktionen mit den Cursormitteln in verschiedenen Anzeigetafeln 3 der Untermenü-Hierarchie mit Programmvorschaulisten zu einer Sendung und anderen Untermenüs zeigt Hauptmenü-Hierarchie immer die benötigten Zeitrelationen an.

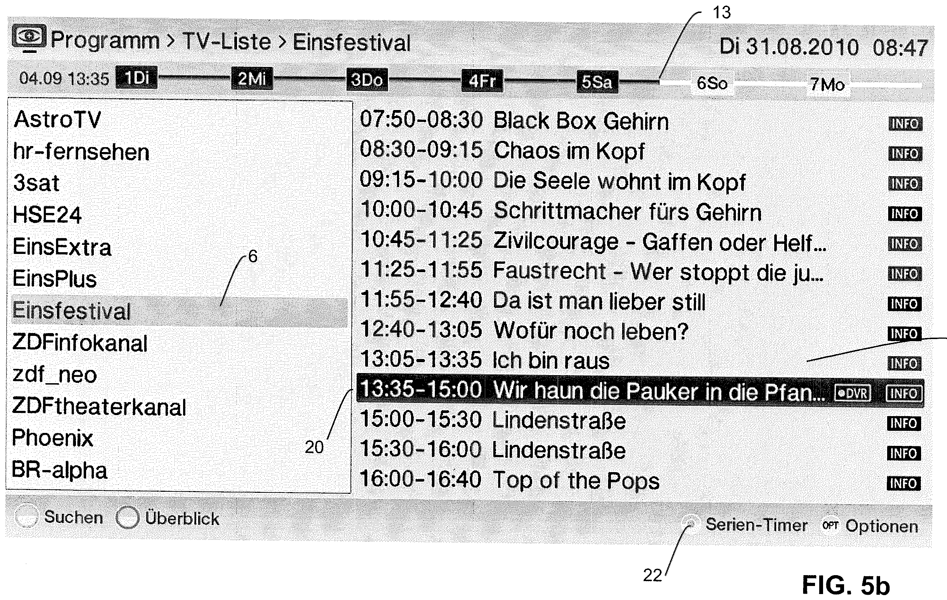

FIG.5c zeigt eine Menüstruktur für eine Zeitprogrammierung des Empfängers mit einer Hauptmenü-Hierarchie und mehreren Untermenü-Hierarchien. Die Hauptmenü-Hierarchie liefert den bekannten aktiven Zeitnavigator für Anfangszeiten von Sendungen und einer dynamischen analogen Verlaufsanzeige im Programmzeitstrahl 7. Die erste Untermenü-Hierarchie liefert die aus FIG.5b bekannte Untermenü-Hierarchie mit einer Sendeverlaufsliste für die Programmquelle "Einsfestival" und FIG.5c eine zusätzliche, tiefere Untermenüebene 26 zum Auswählen von Zeitprogrammierungen des Empfängers.

In einer vorteilhaften Ausführung der Erfindung generieren die Menügeneratormittel beim zeitlichen Auswählen von Sendungen in der Untermenü-Hierarchie für die Hauptmenü-Hierarchie eine Anzeige, die durch eine zeitliche Lage 13 einer dynamischen Verlaufsanzeige im Programmzeitstrahl 7 den Wiedergabezeitpunkt der ausgewählten Sendung in der Relation zum Programmvorschau-Zeitraum anzeigt.

Bei einer weiteren Ausführungsform der Erfindung überprüfen die Menügeneratormittel beim Markieren einer Programmquelle mit dem Cursor 6 und Betätigen des Eingabemittels 22, in welchem Umfang Begleitinformation zu Sendungen der markierten Programmquelle im Programmvorschau-Zeitraum vorliegt, um die Zeitbereiche 9 des Programmzeitstrahls 7, für welche die nichtflüchtigen Speichermittel keine Programmdaten von Sendungen enthalten, anders anzuzeigen als die Zeitbereiche 8, für welche die nichtflüchtigen Speichermittel Programmdaten von Sendungen enthalten.

Gemäß einer weiteren vorteilhaften Ausführung der Erfindung weist die interaktive Programmführungseinrichtung eine zusätzliche Anzeige von Sendungsbeginn 17, Sendungsende 18 und das detaillierte Datum 19 zu Sendungen auf, welche der Menügenerator in einer Sendungstafel 12 in der Untermenü-Hierarchie anzeigt.

Aus den Darstellungen ist ersichtlich, dass der dargestellte Zeitnavigator insbesondere mit seiner dynamischen analogen Verlaufsanzeige im Programmzeitstrahl 7 ein wesentliches zeitliches Orientierungsmittel bietet, das dem Nutzer anzeigt, in welchen Zeitbereich der Gesamtprogrammübersicht eine geplante Aktion mit der Interaktive Programmführungseinrichtung liegt.

## Patentansprüche

1. Interaktive Programmführungseinrichtung mit Steuerfunktionen für einen digitalen Fernsehempfänger, welche empfängerinterne Menügeneratormittel aufweist, wobei die Menügeneratormittel mittels Begleitinformation zu verfügbaren Programmquellen eine interaktive Benutzeroberfläche mit Anzeigetafeln erstellen, welche auf Programmdaten basiert, die in nichtflüchtigen Speichermitteln des Fernsehempfängers gespeichert sind, und für die Benutzeroberfläche im Wesentlichen mindestens zwei Menü-Hierarchien zum simultanen Darstellen auf einem Wiedergabeschirm generieren, wobei die Menü-Hierarchien enthalten:
- eine Hauptmenü-Hierarchie, in der die Menügeneratormittel entsprechend von Anfragen eines Nutzers aus den nichtflüchtigen Speichermitteln Programmdaten zu Sendungen abfordern, um eine Programmquellenliste (4) zu erstellen und die Programmquellenliste (4) als einen Teil von verfügbaren Programmquellen in einem ersten Anzeigebereich (1) des Wiedergabeschirms mindestens mit dem Namen (5) der Programmquellen so darzustellen, dass eine Programmquelle mit einem Cursor (6) von Cursormitteln ausgewählt und markiert werden kann, um durch Betätigen eines Eingabemittels (22) aus den Speichermitteln Einstellparameter zum Ausführen einer Gerätefunktion für die markierte Programmquelle abzurufen und
- eine Untermenü-Hierarchie, welche für die markierte Programmquelle auf Eingabe-Aufforderung durch einen Nutzer in einem weiteren Anzeigebereich (3) des Wiedergabeschirms weitere Begleitinformation mindestens für die markierte Programmquelle darstellt,
wobei die Menügeneratormittel eingerichtet sind, aus den Programmdaten einen Zeitnavigator zu generieren,
wobei der Zeitnavigator in einem zweiten Anzeigebereich (2) des Wiedergabeschirms auf einem Programmzeitstrahl (7) entlang einer Zeitachse dargestellt ist und die Zeitachse eine Relation zu einem definierten Programmvorschau-Zeitraum (23) aufweist,
wobei der Zeitnavigator eingerichtet ist zum Anzeigen
- von Tagesmarkierungen von Sendungen zu der markierten Programmquelle auf der Zeitachse in der Relation zu dem definierten Programmvorschau-Zeitraum (23), wobei die Tagesmarkierungen tägliche Zeitbereiche (8, 9) definieren und den Programmvorschau-Zeitraum (23) für die verfügbaren Videorundfunkdienste umfassen, und der Zeitnavigator ferner eingerichtet ist zum Anzeigen
- eines Umfanges der Begleitinformation zu der markierten Programmquelle auf der Zeitachse in der Relation zu dem definierten Programmvorschau-Zeitraum (23),
mittels dem, die Zeitbereiche (9) des Programmzeitstrahls (7), für welche die nichtflüchtigen Speichermittel keine Programmdaten von Sendungen enthalten, anders anzuzeigen als die Zeitbereiche (8), für welche die nichtflüchtigen Speichermittel Programmdaten von Sendungen enthalten.

2. Interaktive Programmführungseinrichtung nach Anspruch 1, bei der die Menügeneratormittel den zweiten Anzeigebereich (2) als eine dynamische Verlaufsanzeige im Programmzeitstrahl (7) darstellen, bei dem die auf dem Wiedergabeschirm in der Untermenü-Hierarchie dargestellte Begleitinformation in einer zeitlichen Relation (10, 11) zum Programmvorschau-Zeitraum steht.

3. Interaktive Programmführungseinrichtung nach Anspruch 1, bei der die Menügeneratormittel beim zeitlichen Auswählen von Sendungen in der Untermenü-Hierarchie für die Hauptmenü-Hierarchie eine Anzeige generieren, die durch eine zeitliche Lage (13) einer dynamischen Verlaufsanzeige im Programmzeitstrahl (7) den Wiedergabezeitpunkt der ausgewählten Sendung in der Relation zum Programmvorschau-Zeitraum anzeigt.

4. Interaktive Programmführungseinrichtung nach Anspruch 1, bei der die Menügeneratormittel nach einer Eingabe durch den Nutzer einen Suchlauf in den gespeicherten Programmdaten nach Sendungen innerhalb des Programmvorschau-Zeitraums (23) starten und
- die Suchergebnisse in Form einer Sendungstafel (12) in der Untermenü-Hierarchie und
- eine zeitliche Lage (13) der in der Untermenü-Hierarchie ausgewählten Sendung im in der Hauptmenü-Hierarchie liegenden Programmzeitstrahl (7) in Relation zum Programmvorschau-Zeitraum (23) ausgeben.

5. Interaktive Programmführungseinrichtung nach Anspruch 1, bei der die Menügeneratormittel in der Untermenü-Hierarchie das Agieren mit den Cursormitteln ermöglichen, um in der Anzeigetafel (10) mit einer Programmvorschauliste eine Sendung zu markieren, die zum Einstellen einer Zeitprogrammierung dient.

6. Interaktive Programmführungseinrichtung nach Anspruch 1, mit einem Zeitnavigator, welcher den Zeitpunkt für den Beginn einer Sendung zwischen zwei aufeinanderfolgenden Tagen des Programmvorschau-Zeitraums im Programmzeitstrahl (7) als abgelaufene Zeit des Tages, an dem die Sendung stattfindet, anzeigt.

7. Interaktive Programmführungseinrichtung nach Anspruch 6, mit einem Zeitnavigator, der einen Programmzeitstrahl (7) für eine kontinuierliche Zeitanzeige der zeitlichen Lage (13) sowie einen Bereich mit einer detaillierten Datumsanzeige (15) aufweist.

8. Interaktive Programmführungseinrichtung nach Anspruch 1, mit einer zusätzlichen Anzeige von Sendungsbeginn (17), Sendungsende (18) und das detaillierte Datum (19) zu Sendungen, welche die Menügeneratormittel in einer Sendungstafel (12) in der Untermenü-Hierarchie anzeigen.

## Claims

1. Interactive program guide device having control functions for a digital television receiver, comprising receiver-internal menu generator means, wherein the menu generator means establish, by means of accompanying information on available program sources, an interactive user interface with display panels, which is based on program data stored in non-volatile memory means of the television receiver, and generate, for the user interface, substantially at least two menu hierarchies for simultaneous display on a playback screen, the menu hierarchies including:
- a main menu hierarchy in which the menu generator means, in accordance with requests from a user, request program data on broadcasts from the non-volatile memory means to generate a program source list (4) and to display the program source list (4) as a part of available program sources in a first display area (1) of the playback screen at least with the name (5) of the program sources, in a way that a program source can be selected and marked by a cursor (6) of cursor means in order to retrieve from the memory means setting parameters for executing a device function for the marked program source by operating an input means (22), and
- a sub-menu hierarchy which, when requested by input by a user, displays in a further display area (3) of the playback screen further accompanying information for the marked program source at least for the marked program source,
wherein the menu generator means are configured to generate a time navigator from the program data,
wherein the time navigator is displayed in a second display area (2) of the playback screen on a program time bar (7) along a time axis and the time axis comprises a relation to a defined program preview period (23),
wherein the time navigator is configured to display
- daily marks of broadcasts as to the marked program source on the time axis in relation to the defined program preview period (23), the daily marks defining daily time ranges (8, 9) and comprising the program preview period (23) for the available video broadcast services, and the time navigator is further configured to display
- a range of the accompanying information on the marked program source on the time axis in relation to the defined program preview period (23),
by means of which the time ranges (9) of the program time bar (7) for which the non-volatile memory means do not include any program data of broadcasts are displayed differently from the time ranges (8) for which the non-volatile memory means include program data of broadcasts.

2. Interactive program guide device according to claim 1, wherein the menu generator means display the second display area (2) as a dynamic progression display in the program time bar (7), wherein the accompanying information displayed on the playback screen in the submenu hierarchy is in a temporal relation (10, 11) to the program preview period.

3. Interactive program guide device according to claim 1, wherein the menu generator means, when time-selecting broadcasts in the submenu hierarchy for the main menu hierarchy, generate a display which, by a time-related position (13) of a dynamic progress display in the program time bar (7), indicates the playback time of the selected broadcast in relation to the program preview period.

4. Interactive program guide device according to claim 1, wherein the menu generator means, after an input by the user, start a search run in the stored program data for broadcasts within the program preview period (23) and
- output the search results in the form of a broadcast table (12) in the submenu hierarchy and
- a time-related position (13) of the broadcast selected in the submenu hierarchy in the program time bar (7) lying in the main menu hierarchy in relation to the program preview period (23).

5. Interactive program guide device according to claim 1, wherein the menu generator means in the sub-menu hierarchy allow acting with the cursor means to mark in the display panel (10) with a program preview list a broadcast which serves for setting a time programming.

6. Interactive program guide device according to claim 1, having a time navigator which displays the time for the start of a broadcast between two successive days of the program preview period in the program time bar (7) as the elapsed time of the day on which the broadcast takes place.

7. Interactive program guide device according to claim 6, having a time navigator comprising a program time bar (7) for continuous time display of the time-related position (13) and an area with a detailed date display (15).

8. Interactive program guide device according to claim 1, having an additional display of a broadcast start (17), broadcast end (18) and the exact date (19) of broadcasts, which the menu generator means display in a broadcast table (12) in the submenu hierarchy.

## Revendications

1. Dispositif de guide de programme interactif ayant des fonctions de commande pour un récepteur de télévision numérique, comprenant des moyens de génération de menu internes au récepteur, dans lequel les moyens de génération de menu établissent, au moyen d'informations d'accompagnement sur des sources de programme disponibles, une interface utilisateur interactive avec des panneaux d'affichage, qui est basée sur des données de programme stockées dans des moyens de mémoire non volatile du récepteur de télévision, et génèrent, pour l'interface utilisateur, sensiblement au moins deux hiérarchies de menu pour l'affichage simultané sur un écran de reproduction, les hiérarchies de menu comprenant :
- une hiérarchie de menu principal dans laquelle les moyens de génération de menu demandent, conformément à des demandes d'un utilisateur, des données de programme sur des émissions à partir des moyens de mémoire non volatile pour générer une liste de sources de programme (4) et pour afficher la liste de sources de programme (4) comme une partie de sources de programme disponibles dans une première zone d'affichage (1) de l'écran de reproduction au moins avec le nom (5) des sources de programme, de manière à ce qu'une source de programme puisse être sélectionnée et marquée par un curseur (6) de moyens de curseur afin de recueillir dans les moyens de mémoire des paramètres de réglage pour l'exécution d'une fonction de dispositif pour la source de programme marquée en actionnant un moyen de saisie (22), et
- une hiérarchie de sous-menu qui, à la demande d'un utilisateur, affiche dans une autre zone d'affichage (3) de l'écran de reproduction d'autres informations d'accompagnement pour la source de programme marquée, au moins pour la source de programme marquée,
où les moyens de génération de menu sont configurés pour générer un navigateur de temps à partir des données de programme,
dans lequel le navigateur de temps est affiché dans une deuxième zone d'affichage (2) de l'écran de reproduction sur une barre de temps de programme (7) le long d'un axe de temps et l'axe de temps comprend une relation avec une période de prévisualisation de programme définie (23),
dans lequel le navigateur de temps est configuré pour afficher
- des marques de jour d'émissions quant à la source de programme marquée sur l'axe de temps par rapport à la période de prévisualisation de programme définie (23), les marques de jour définissant des plages de temps quotidiennes (8, 9) et comprenant la période de prévisualisation de programme (23) pour les services de diffusion vidéo disponibles, et le navigateur de temps étant en outre configuré pour afficher
- un volume des informations d'accompagnement sur la source de programme marquée sur l'axe de temps en relation avec la période de prévisualisation de programme définie (23),
au moyen duquel les plages de temps (9) de la barre de temps de programme (7) pour lesquelles les moyens de mémoire non volatile ne comprennent aucune donnée de programme d'émissions sont affichées différemment des plages de temps (8) pour lesquelles les moyens de mémoire non volatile comprennent des données de programme d'émissions.

2. Dispositif de guide de programme interactif selon la revendication 1, dans lequel les moyens de génération de menu affichent la deuxième zone d'affichage (2) sous la forme d'un affichage dynamique de progression dans la barre de temps de programme (7), dans lequel l'information d'accompagnement affichée sur l'écran de reproduction dans la hiérarchie de sous-menu est en relation temporelle (10, 11) avec la période de prévisualisation de programme.

3. Dispositif de guide de programme interactif selon la revendication 1, dans lequel les moyens de génération de menu, lors de la sélection temporelle d'émissions dans la hiérarchie de sous-menu, génèrent un affichage pour la hiérarchie de menu principal, qui, par une position temporelle (13) d'un affichage dynamique de progression dans la barre de temps de programme (7), indique le moment de reproduction de l'émission sélectionnée par rapport à la période de prévisualisation de programme.

4. Dispositif de guide de programme interactif selon la revendication 1, dans lequel les moyens de génération de menu lancent, après une entrée par l'utilisateur, une recherche dans les données de programme stockées pour des émissions pendant la période de prévisualisation de programme (23) et
- délivrent les résultats de la recherche sous la forme d'un tableau de diffusion (12) dans la hiérarchie de sous-menu et
- une position temporelle (13) de l'émission sélectionnée dans la hiérarchie de sous-menu dans la barre de temps de programme (7) se trouvant dans la hiérarchie de menu principal par rapport à la période de prévisualisation de programme (23).

5. Dispositif de guide de programme interactif selon la revendication 1, dans lequel les moyens de génération de menu dans la hiérarchie de sous-menu permettent d'agir avec les moyens de curseur pour marquer dans le panneau d'affichage (10) avec une liste de prévisualisation de programme une émission qui sert à régler une programmation de temps.

6. Dispositif de guide de programme interactif selon la revendication 1, comportant un navigateur de temps qui affiche l'heure de début d'une émission entre deux jours successifs de la période de prévisualisation de programme dans la barre de temps de programme (7) comme étant le temps écoulé du jour où l'émission a lieu.

7. Dispositif de guide de programme interactif selon la revendication 6, comportant un navigateur de temps comprenant une barre de temps de programme (7) pour un affichage de temps en continu de la position temporelle (13) et une zone avec un affichage détaillé de la date (15).

8. Dispositif de guide de programme interactif selon la revendication 1, comportant un affichage supplémentaire du début d'émission (17), de la fin d'émission (18) et de la date exacte (19) d'émissions, que les moyens de génération de menu affichent dans un tableau d'émission (12) dans la hiérarchie de sous-menu.
